# EUROPEAN PATENT APPLICATION

(11) **EP 3 147 848 A1**
(43) Date of publication of application: **29.03.2017**
(21) Application number: 16176238.0
(22) Date of filing: 24.06.2016
(51) Int. Cl.: G06Q 20/20, G06Q 30/02, G06Q 30/06

(54) **SALES DATA PROCESSING DEVICE AND SALES DATA PROCESSING METHOD**

(30) Priority: 24.09.2015 JP 2015186636
(71) Applicant: CASIO COMPUTER CO., LTD., Shibuya-ku, Tokyo 151-8543 (JP)
(72) Inventor: ENOMOTO, Shigeki, Tokyo, 205-8555 (JP); ITAKURA, Katsuyuki, Tokyo, 205-8555 (JP)
(74) Representative: Grünecker Patent- und Rechtsanwälte PartG mbB

(57) **Abstract**

A sales data processing device includes an operator display unit, a customer display unit and a display control unit. The operator display unit displays a screen for an operator to operate. The customer display unit displays a screen for a customer to view. The display control unit displays, on the screen of the operator display unit, a recommendation button to start displaying information on a recommended item on the screen of the customer display unit. When the recommendation button is operated by the operator, the display control unit displays the information on the recommended item on the screen of the customer display unit and displays an input button to input whether the customer purchases the recommended item on the screen of the operator display unit.

## Description

### BACKGROUND OF THE INVENTION

### 1. Field of the Invention

The present invention relates to a sales data processing device and a sales data processing method.

### 2. Background Art

As a sales data processing device which registers sales of items (products), such as an ECR (Electronic Cash Register), one having an output device placed to face customers is known. There is described, for example, in Japanese Patent Application Publication No. 2015-26242 a registration process device which timely displays, on an output device on a customer side, a recommended item(s) according to change in the weather outside a store.

However, the device described in Japanese Patent Application Publication No. 2015-26242 merely displays to customers recommended items according to change in the weather outside a store, and an operator at a register (cashier) does not get involved therein. As a result of that, effective proposal cannot always be made to customers.

### SUMMARY OF THE INVENTION

Objects of the present invention include proposing items to customers more effectively.

According to a first aspect of the present invention, there is provided a sales data processing device including: an operator display unit which displays a screen for an operator to operate; a customer display unit which displays a screen for a customer to view; and a display control unit which displays, on the screen of the operator display unit, a recommendation button to start displaying information on a recommended item on the screen of the customer display unit, and when the recommendation button is operated by the operator, displays the information on the recommended item on the screen of the customer display unit and displays an input button to input whether the customer purchases the recommended item on the screen of the operator display unit.

According to a second aspect of the present invention, there is provided a sales data processing method including: a first step of displaying, on a screen of an operator display unit which displays the screen for an operator to operate, a recommendation button to start displaying information on a recommended item on a screen of a customer display unit which displays the screen for a customer to view; and a second step of, when the recommendation button is operated by the operator, displaying the information on the recommended item on the screen of the customer display unit and displaying an input button to input whether the customer purchases the recommended item on the screen of the operator display unit.

According to the present invention, items can be proposed to customers more effectively.

### BRIEF DESCRIPTION OF THE DRAWINGS

The present invention is fully understood from the detailed description given hereinafter and the accompanying drawings, which are given by way of illustration only and thus are not intended to limit the present invention, wherein:
FIG. 1A is an external view schematically showing the configuration of a sales data processing device according to an embodiment of the present invention;
FIG. 1B is an external view schematically showing the configuration of the sales data processing device according to the embodiment of the present invention;
FIG. 2 is a block diagram showing the functional configuration of the sales data processing device shown in FIG. 1A and FIG. 1B;
FIG. 3 shows an example of data storage in a recommended item file;
FIG. 4 shows an example of data storage in a performance-by-operator file;
FIG. 5 is a flowchart of an item registration process performed by a CPU shown in FIG. 2;
FIG. 6 shows an example of an item registration screen;
FIG. 7 shows an example of the item registration screen with a recommendation button displayed;
FIG. 8 shows an example of an advertisement screen;
FIG. 9 shows an example of an in-promoting screen;
FIG. 10 shows an example of a receipt;
FIG. 11 is a flowchart of a tallying process performed by the CPU shown in FIG. 2;
FIG. 12 shows an example of a report; and
FIG. 13 shows an example of an option detail selection screen.

### DETAILED DESCRIPTION OF THE PREFERRED EMBODIMENT

Hereinafter, a preferred embodiment of the present invention is detailed with reference to the attached drawings. However, the present invention is not limited thereto.

### (Configuration of Sales Data Processing Device 1)

A sales data processing device 1 is placed at a store/shop, and performs an item registration process to register, based on operator operations, items purchased by customers (item registration).

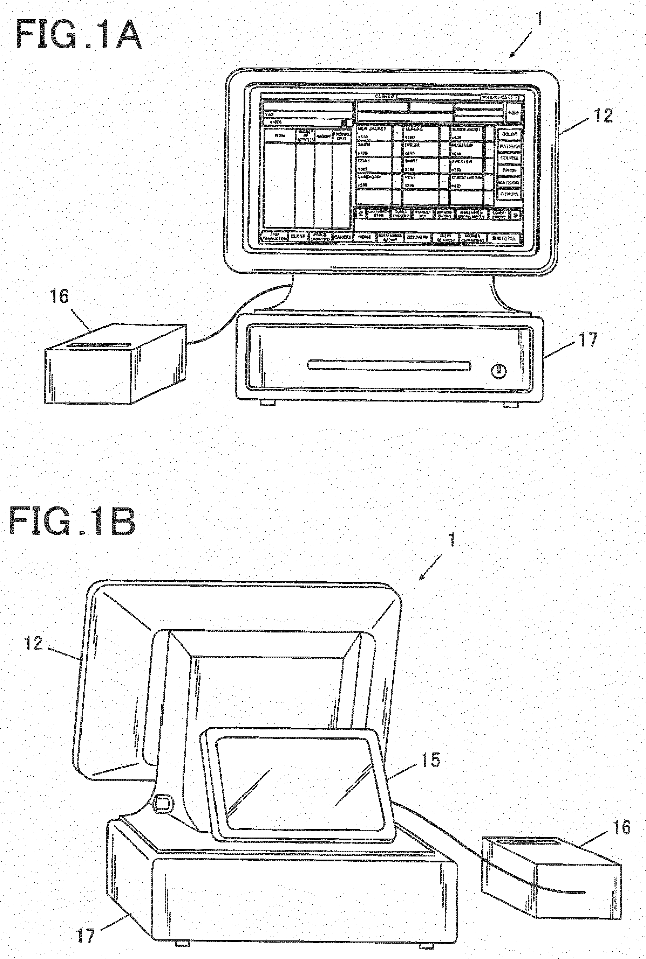

FIGS. 1A and 1B are external views schematically showing the configuration of the sales data processing device 1.

As shown in FIGS. 1A and 1B, the sales data processing device 1 includes: an operator display unit 12 which displays operation screens for operators to operate; and a customer display unit 15 which displays various screens for customers to view.

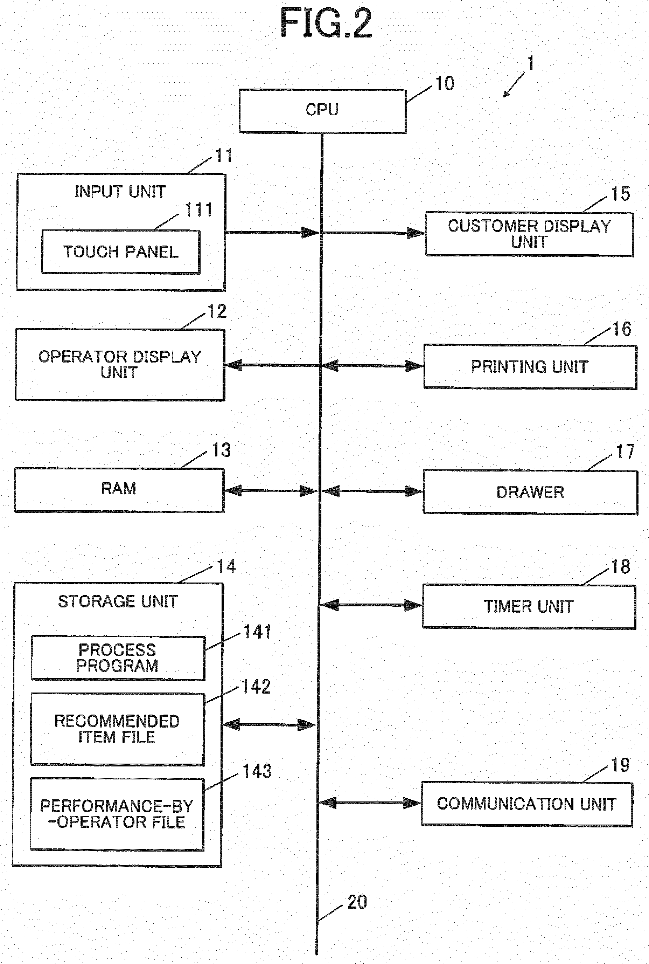

FIG. 2 is a block diagram showing the functional configuration of the sales data processing device 1.

As shown in FIG. 2, the sales data processing device 1 includes a CPU (Central Processing Unit) 10, an input unit 11, the operator display unit 12, a RAM (Random Access Memory) 13, a storage unit 14, the customer display unit 15, a printing unit 16, a drawer 17, a timer unit 18 and a communication unit 19. These units or the like are connected to one another via a bus 20.

The CPU 10 reads a system program stored in the storage unit 14, opens the read system program in a work area of the RAM 13, and controls the units or the like according to the system program. Further, the CPU 10 reads a process program 141 stored in the storage unit 14, opens the read process program 141 in the work area of the RAM 13, and performs various processes including the below-described item registration process and tallying process according to the process program 141. The CPU 10 functions as a display control unit and a tallying unit.

The input unit 11 includes a touch panel 111 formed by being superposed on the screen of the operator display unit 12. The touch panel 111 detects press operations on the screen of the operator display unit 12 and outputs positional information on the positions of the press operations to the CPU 10.

The input unit 11 further includes a barcode reader, a barcode scanner or the like to read barcodes representing membership numbers, the barcodes being provided on membership cards.

The operator display unit 12 is a display unit constituted of an LCD (Liquid Crystal Display) monitor or the like and placed to face an operator who operates the sales data processing device 1. The operator display unit 12 displays operation screens for the operator (s) to operate, in response to commands of display signals input from the CPU 10.

The RAM 13 has the work area where the system program and the process program 141 read by the CPU 10 from the storage unit 14, input data, output data, parameters and so forth are temporarily stored.

The storage unit 14 is constituted of a nonvolatile semiconductor memory or the like. The storage unit 14 stores therein the system program and the process program 141 to be executed by the CPU 10, data necessary for execution of the programs and so forth. The process program 141 includes programs for various processes including the below-described item registration process and tallying process. These programs are stored in the storage unit 14 in the form of a computer readable program code. The CPU 10 acts according to the program code.

The storage unit 14 also stores therein: various master files such as an item master file, a customer master file and a handling person master file; a sales data file; and so forth (all not shown).

The item master file is a file in which item codes are correlated and stored with item names, group names, unit prices and so forth.

The customer master file is a file in which membership numbers are each correlated and stored with customer information (name, sex, age, phone number, etc.).

The handling person master file is a file in which handling person codes are correlated and stored with handling person names (operator names) and so forth.

The handling persons are operators who operate the sales data processing device 1.

The sales data file is a file in which sales data, such as sold items, date (s) and time, amounts (of money) and the total amounts (of money), is stored.

In the embodiment, the storage unit 14 also stores therein a recommended item file 142 and a performance-by-operator file 143.

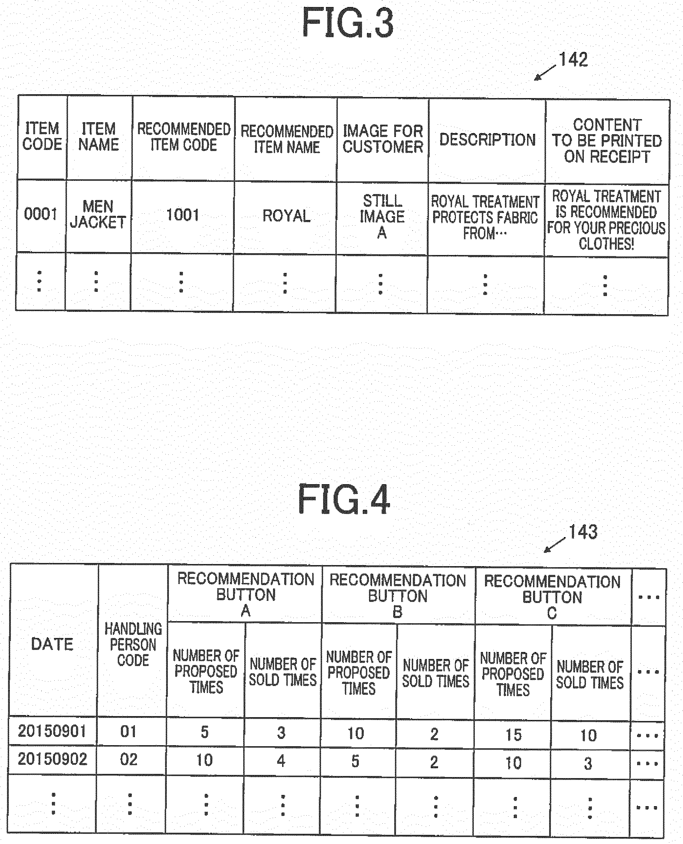

FIG. 3 shows an example of data storage in the recommended item file 142.

As shown in FIG. 3, the recommended item file 142 is provided with fields of "Item Code", "Item Name", "Recommended Item Code", "Recommended Item Name", "Image for Customer", "Description", "Content to be Printed on Receipt" and so forth.

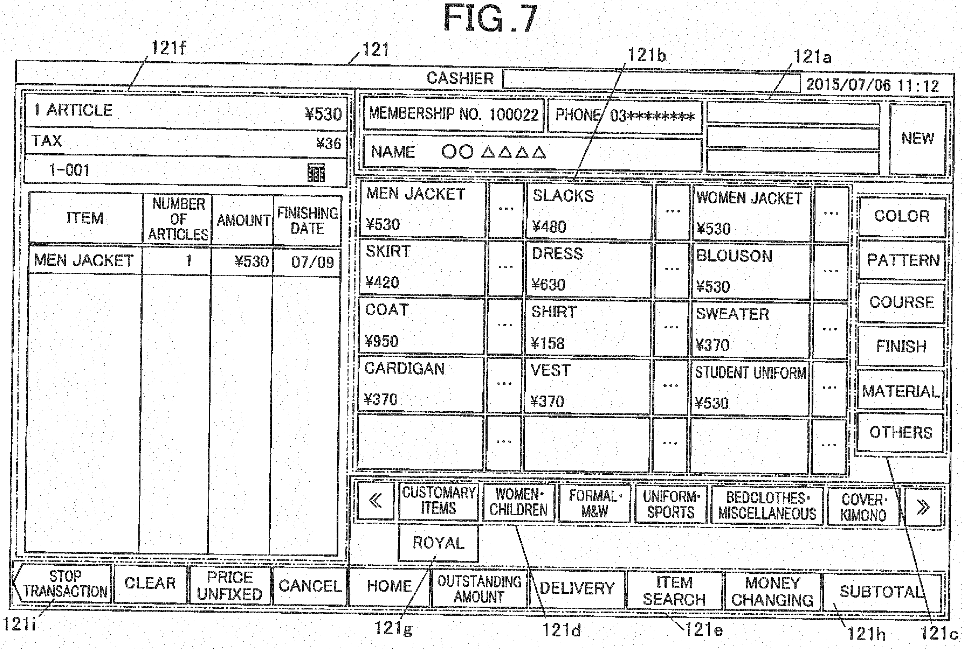

That is, in the recommended item file 142, each item information ("Item Code", "Item Name") is correlated and stored with an item code of a recommended item related to the item ("Recommended Item Code"), an item name of the recommended item ("Recommended Item Name"), image identification information on a still image or a moving image to be displayed on the customer display unit 15 when a recommendation button 121g (shown in FIG. 7) for the recommended item is pressed ("Image for Customer"), a description of the recommended item to be displayed on the operator display unit 12 when the recommendation button 121g for the recommended item is pressed ("Description"), and a content to be printed on recording paper (receipt paper) when the recommended item is not registered ("Content to be Printed on Receipt", i.e., advertisement information on the recommended item).

A plurality of recommended items may be correlated with one item.

FIG. 4 shows an example of data storage in the performance-by-operator file 143.

As shown in FIG. 4, the performance-by-operator file 143 is provided with fields of "Date", "handling Person Code", and "Number of Proposed Times" and "Number of Sold Times" for each recommendation button 121g. In the performance-by-operator file 143, the number of proposed times (the number of button presses) and the number of sold times are stored for each recommendation button 121g and each handling person.

The storage unit 14 also stores therein a still image (s) or a moving image (s) correlated with each image identification information.

The customer display unit 15 is a display unit constituted of an LCD (Liquid Crystal Display) monitor or the like and placed to face a customer for whom the sales data processing device 1 calculates a bill. The customer display unit 15 displays various screens for the customer(s) to view, in response to commands of display signals input from the CPU 10.

The printing unit 16 is, for example, a thermal printer. The printing unit 16 has rolled recording paper (receipt paper), and prints the sales data, messages for customers and so forth on the recording paper in response to command signals input from the CPU 10.

The drawer 17 is a drawer where cash, such as coins and notes (paper money), is stored. The drawer 17 opens in response to commands input from the CPU 10.

The timer unit 18 has a timer circuit, such as an RTC (Real Time Clock), built-in, and measures and then outputs current time and current date to the CPU 10.

The communication unit 19 includes a modem, a router and a network card. The communication unit 19 sends/receives data to/from external devices connected via a communication network.

### (Action of Sales Data Processing Device 1)

Next, action of the sales data processing device 1 is described.

When the sales data processing device 1 is started, the CPU 10 displays a login screen (not shown) on the operator display unit 12 by working together with the process program 141.

The login screen is a screen where handling person buttons for respective operators are displayed. When the touch panel 111 detects a press on one of the handling person buttons, the CPU 10 stores a handling person code corresponding to the pressed handing person button in the RAM 13 and displays a menu screen (not shown) on the operator display unit 12.

When the touch panel 111 detects an operation to select item registration on the menu screen, the CPU 10 performs an item registration process.

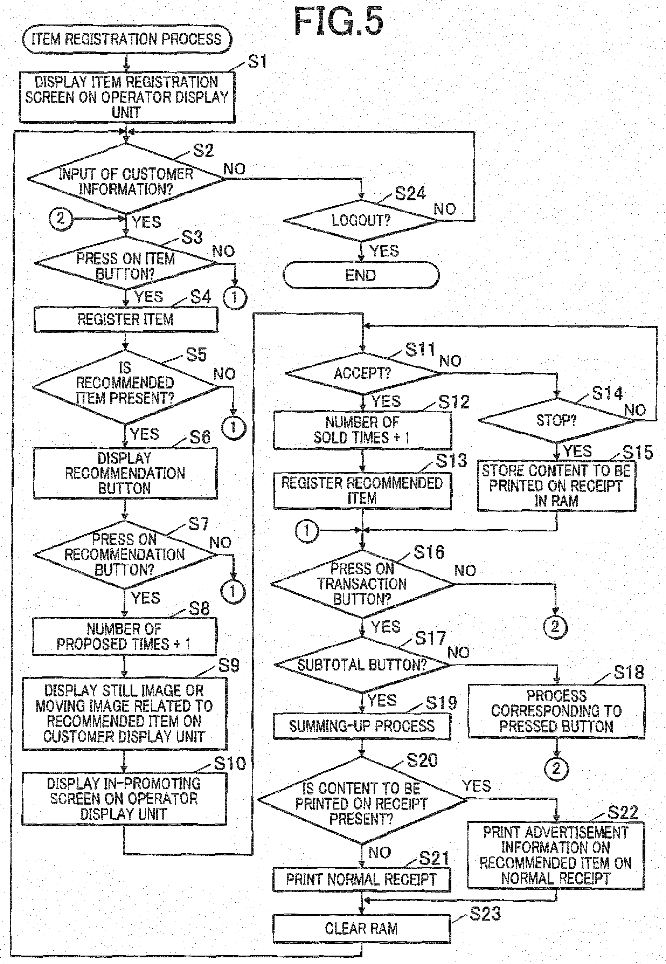

FIG. 5 is a flowchart of the item registration process. The item registration process is performed by the CPU 10 working together with the process program 141.

First, the CPU 10 displays an item registration screen 121 on the operator display unit 12 (Step S1).

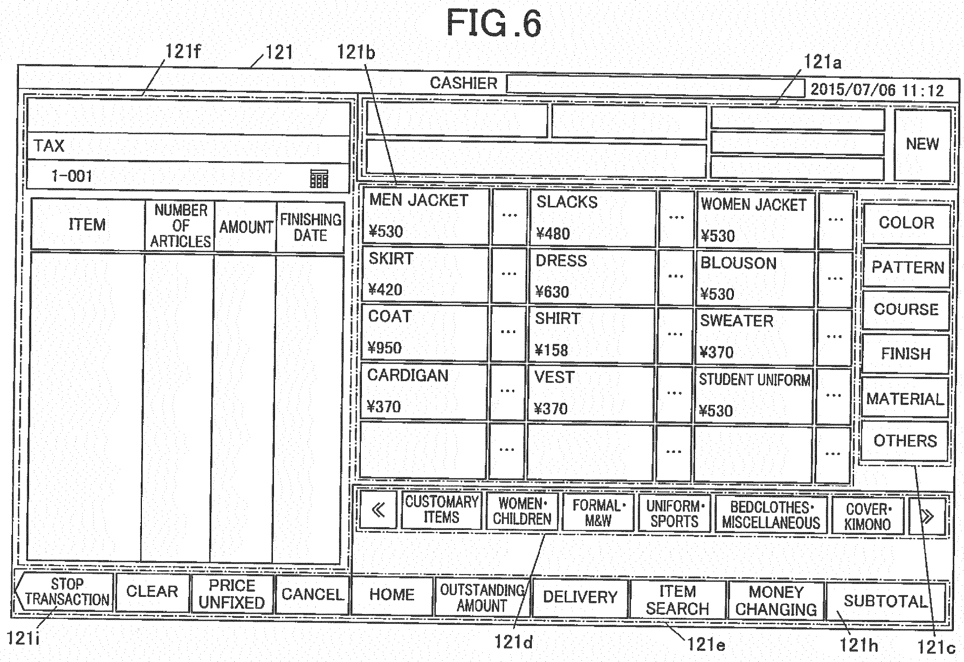

FIG. 6 shows an example of the item registration screen 121.

As shown in FIG. 6, the item registration screen 121 is provided with a customer information display section 121a, item buttons 121b, option buttons 121c, item group buttons 121d, transaction buttons 121e, a registered item list display section 121f and so forth. The transaction buttons 121e include a "Subtotal" button 121h and a "Stop Transaction" button 121i.

Next, the CPU 11 determines whether customer information is input with the input unit 11 (Step S2).

Customer information can be input, for example, by reading, with the barcode reader of the input unit 11, a barcode which is written on a membership card and represents a membership number.

Customer information may be input by pressing a keyboard so as to input a membership number or a phone number. The keyboard is displayed by touching a membership number display section or a phone number display section in the customer information display section 121a of the item registration screen 121.

In the case of a new customer, customer information is input by pressing a keyboard which is displayed by pressing a "New" bottom in the customer information display section 121a of the item registration screen 121.

When determines that customer information is input with the input unit 11 (Step S2; YES), the CPU 10 determines whether a press on an item button 121b is detected by the touch panel 111 (Step S3).

When determines that no press on any item button 121b is detected by the touch panel 111 (Step S3; NO), the CPU 10 proceeds to Step S16.

On the other hand, when determines that a press on an item button 121b is detected by the touch panel 111 (Step S3; YES), the CPU 10 performs item registration (Step S4). The item registration means registering sales of an item(s) purchased by a customer in the sales data processing device 1.

More specifically, at Step S4, the CPU 10 stores and/or displays an item code (item name) of an item corresponding to the pressed item button 121b, an amount (s), date and time, and the total purchased amount by a customer in the RAM 13 and/or on the operator display unit 12 and/or the customer display unit 15.

Next, the CPU 10 refers to the recommended item file 142 and determines whether a recommended item related to the item registered at Step S4 is present (Step S5). When determines that no recommended item related to the item registered at Step S4 is present (Step S5; NO), the CPU 10 proceeds to Step S16.

On the other hand, when determines that a recommended item related to the item registered at Step S4 is present (Step S5; YES), the CPU 10 refers to the recommended item file 142 and displays a recommendation button 121g for the recommended item related to the registered item on the item registration screen 121 (Step S6).

FIG. 7 shows an example of the item registration screen 121 with a recommendation button 121g displayed.

A recommendation button 121g is a button to start displaying, on the customer display unit 15, information on a recommended item related to a registered item. The recommendation button 121g displays the item name of the recommended item. If there is a plurality of recommended items related to a registered item, recommendation buttons 121g for the respective recommended items are displayed on the item registration screen 121.

The operator judges whether it is a situation where an item can be recommended (e. g. , the customer seems not in a hurry) . When judges that it is the situation where an item can be recommended, the operator presses a recommendation button 121g. If a plurality of recommendation buttons 121g is displayed on the item registration screen 121, the operator selects and presses a desired recommendation button 121g from among the recommendation buttons 121g.

Next, the CPU 10 determines whether a press on the recommendation button 121g is detected by the touch panel 111 (Step S7) . When determines that no press on the recommendation button 121g is detected by the touch panel 111 (Step S7; NO), the CPU 10 proceeds to Step S16.

On the other hand, when determines that a press on the recommendation button 121g is detected by the touch panel 111 (Step S7; YES), the CPU 10 increments (increases by one), in the performance-by-operator file 143, the "Number of Proposed Times" (today) for the pressed recommendation button 121g for the operator who currently logs in (Step S8).

If no record of today' s performance for the operator who currently logs in is generated yet in the performance-by-operator file 143, the CPU 10 generates the record and then writes the number of proposed times therein.

Next, the CPU 10 refers to the recommended item file 142 and displays, on the customer display unit 15, an advertisement screen 151 containing a still image or a moving image related to the recommended item corresponding to the pressed recommendation button 121g (Step S9).

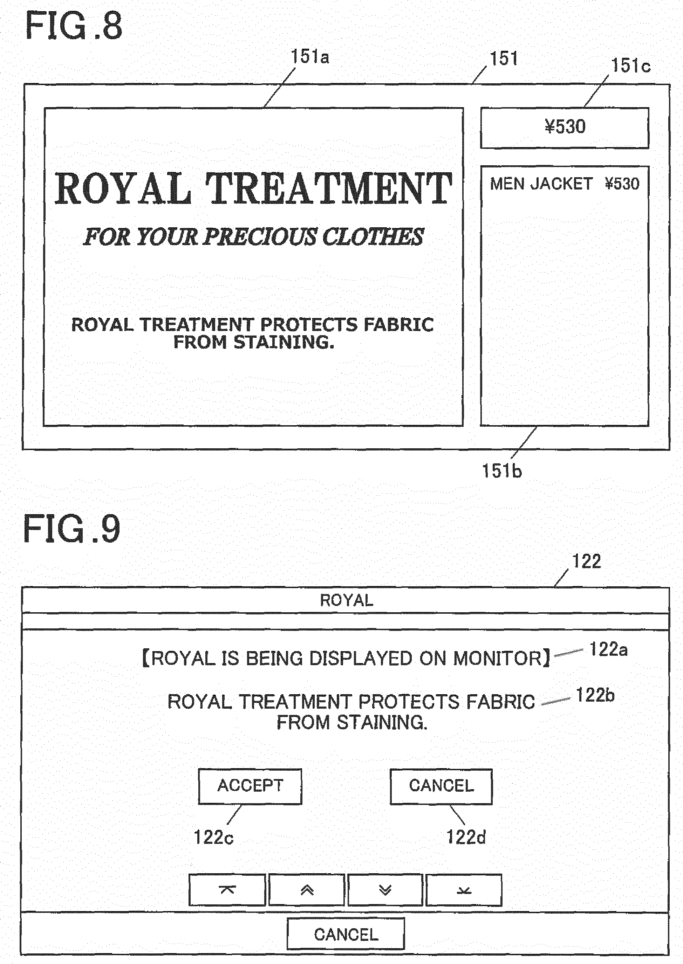

FIG. 8 shows an example of the advertisement screen 151 displayed on the customer display unit 15 at Step S9.

As shown in FIG. 8, the advertisement screen 151 is provided with an advertisement display section 151a, a registered item list display section 151b and a total amount display section 151c. At Step S9, a still image or a moving image related to the recommended item corresponding to the pressed recommendation button 121g is displayed in the advertisement display section 151a.

Thereby, a recommended item related to an item purchased by a customer can be advertised more effectively.

Next, the CPU 10 refers to the recommended item file 142 and displays an in-promoting screen 122 on the operator display unit 12 (Step S10).

FIG. 9 shows an example of the in-promoting screen 122 displayed on the operator display unit 12 at Step S10.

As shown in FIG. 9, on the in-promoting screen 122, a message 122a to inform that the recommended item corresponding to the pressed recommendation button 121g is being promoted (proposed) to the customer, a description 122b of the recommended item to be given to the customer, an "Accept" button 122c and a "Stop" button 122d are displayed.

The "Accept" button 122c and the "Stop" button 122d are input buttons to input whether a customer purchases a recommended item. When a recommendation button 121g is pressed, the "Accept" button 122c and the "Stop" button 122d are displayed instead of the recommendation button 121g.

The in-promoting screen 122 can inform an operator that information on a recommended item is being displayed on the customer display unit 15. On the in-promoting screen 122, the description 122b of the recommended item to be given to the customer is displayed. This assists an operator in proposing a recommended item to a customer and accordingly encourages the operator to propose the recommended item.

Next, the CPU 10 waits until a press on the "Accept" button 122c or the "Stop" button 122d is detected by the touch panel 111.

When determines that a press on the `"Accept" button 122c is detected by the touch panel 111 (Step S11; YES), the CPU 10 increments, in the performance-by-operator 143, the "Number of Sold Times" (today) for the pressed recommendation button 121g for the operator who currently logs in (Step S12), registers the recommended item corresponding to the pressed recommendation button 121g and returns the display on the operator display unit 12 to the item registration screen 121 (Step S13), and proceeds to Step S16.

On the other hand, when determines that a press on the "Stop" button 122d is detected by the touch panel 111 (Step S11; NO, Step S14; YES), the CPU 10 refers to the recommended item file 142, stores a content to be printed on a receipt for the recommended item corresponding to the pressed recommendation button 121g in the RAM 13 and returns the display on the operator display unit 12 to the item registration screen 121 (Step S15), and proceeds to Step S16.

At Step S16, the CPU 10 determines whether a press on a transaction button 121e is detected by the touch panel 111 (Step S16). When determines that no press on any transaction button 121e is detected by the touch panel 111 (Step S16; NO), the CPU 10 returns to Step S3.

On the other hand, when determines that a press on a transaction button 121e is detected by the touch panel 111 (Step S16; YES), the CPU 10 determines whether the pressed transaction button 121e is the "Subtotal" button 121h (Step S17). When determines that the pressed transaction button 121e is not the "Subtotal" button 121h (Step S17; NO), the CPU 10 performs a process corresponding to the pressed transaction button 121e (Step S18), and returns to Step S3.

On the other hand, when determines that the pressed transaction button 121e is the "Subtotal" button 121h (Step S17; YES), the CPU 10 performs a summing-up process (Step S19).

More specifically, the CPU 10 displays a not-shown summing-up screen on the operator display unit 12.

The summing-up screen is a screen on which: a total amount display section where the total amount for transacted (sold) items is displayed; a numeric keypad to input the received amount (of money) ; a received amount display section where the input received amount is displayed; a change display section where the change (amount) is displayed; a cash button; and so forth are displayed.

The CPU 10 displays the total purchased amount, which is stored in the RAM 13, in the total amount display section of the summing-up screen and in the total amount display section 151c of the customer display unit 15. When the operator receives the money for the item(s) from the customer, inputs the received amount and presses the cash button, the CPU 10 calculates the change from the total amount and the received amount and displays the calculated change in the change display section of the summing-up screen.

Then, the CPU 10 opens the drawer 17, and makes the printing unit 16 print the sales data, such as sold items, amounts and the total amount, as a journal and stores the sales data together with a date in the sales data file stored in the storage unit 14.

Next, the CPU 10 determines whether the content to be printed on a receipt is stored in the RAM 13 (Step S20).

When determines that the content to be printed on a receipt is not stored in the RAM 13 (Step S20; NO), the CPU 10 makes the printing unit 16 print the sold item(s), amounts, the total amount, the received amount, the change and so forth on recording paper (receipt paper) (Step S21).

Then, the CPU 10 clears the sales data, the content to be printed on a receipt and so forth, which are stored in the RAM 13 (Step S23), and returns to Step S2.

On the other hand, when determines that the content to be printed on a receipt is stored in the RAM 13 (Step S20; YES), the CPU 10 makes the printing unit 16 print, in addition to the sold item(s), amounts, the total amount, the received amount, the change and so forth, the content to be printed on a receipt (i.e., advertisement information on the recommended item), which is stored in the RAM 13 , on recording paper (receipt paper) (Step S22), clears the sales data, the content to be printed on a receipt and so forth, which are stored in the RAM 13 (Step S23), and returns to Step S2.

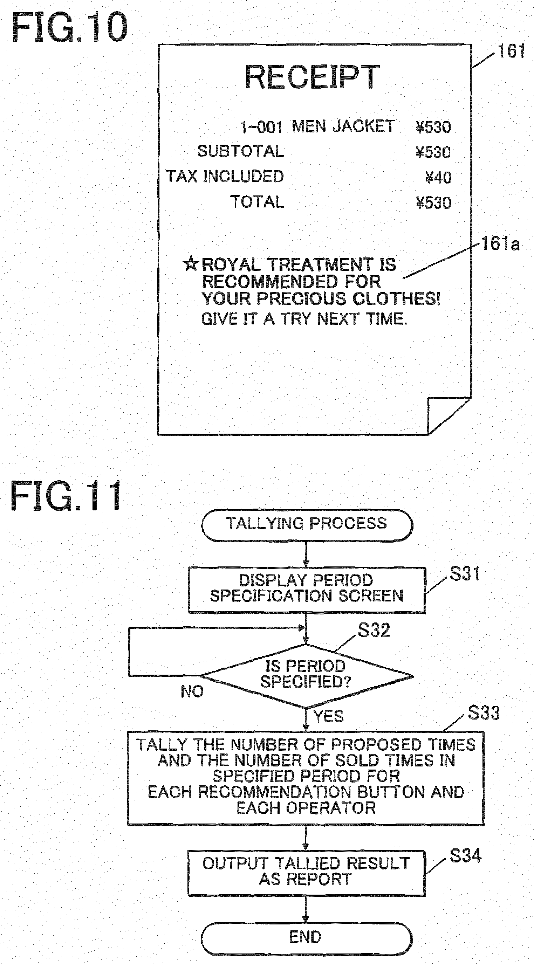

FIG. 10 shows an example of a receipt 161 printed at Step S22. As shown in FIG. 10, on the receipt 161, when a recommended item proposed according to a recommendation button 121g is not purchased by a customer, advertisement information 161a on the item is displayed. Hence, an impression of a proposed recommended item can be given to a customer more effectively.

The receipt 161 means recording paper (receipt paper) on which the sales data, such as names of sold items and amounts, and advertisement information are printed.

When the sales data, such as names of sold items and amounts, is printed on recording paper (receipt paper), whereby a receipt is issued, the operator stores the amount received from the customer in the drawer 17, takes out the charge therefrom, hands the change together with the receipt to the customer, and closes the drawer 17.

When, at Step S2, determines that no customer information is input with the input unit 11 (Step S2; NO), and determines that a logout operation is detected by the touch panel 111 (Step S24; YES), the CPU 10 ends the item registration process and returns to the login screen.

The above is the flow of the item registration process. The number of times (the number of proposed times) operators have pressed the recommendation buttons 121g and thereby proposed items and the number of times (the number of sold times) the proposed items have been purchased can be tallied for each recommendation button 121g and each operator, and can be output as a report.

FIG. 11 is a flowchart of a tallying process performed by the CPU 10.

The tallying process is performed by the CPU 10 working together with the process program 141 when the touch penal 111 detects an operation to select report viewing on the menu screen.

First, the CPU 10 displays, on the operator display unit 12, a period specification screen to specify a tallying period (Step S31).

On the period specification screen, as the tallying period of (i) the number of proposed times the recommendation buttons 121g have been pressed and thereby recommended times have been proposed and (i) the number of sold times the recommended items have been purchased, any of daily, by day of the week, monthly, and a specific period can be specified.

When determines that the specified tallying period is detected by the touch panel 111 (Step S32; YES), the CPU 11 tallies the number of proposed times and the number of sold times in the specified tallying period for each recommendation button 121g and each operator (Step S33), and displays the tallied result on the operator display unit 12 as a report (Step S34). The CPU 10 may make the printing unit 16 print the tallied result as a report or may send the tallied result to an external device through the communication unit 19.

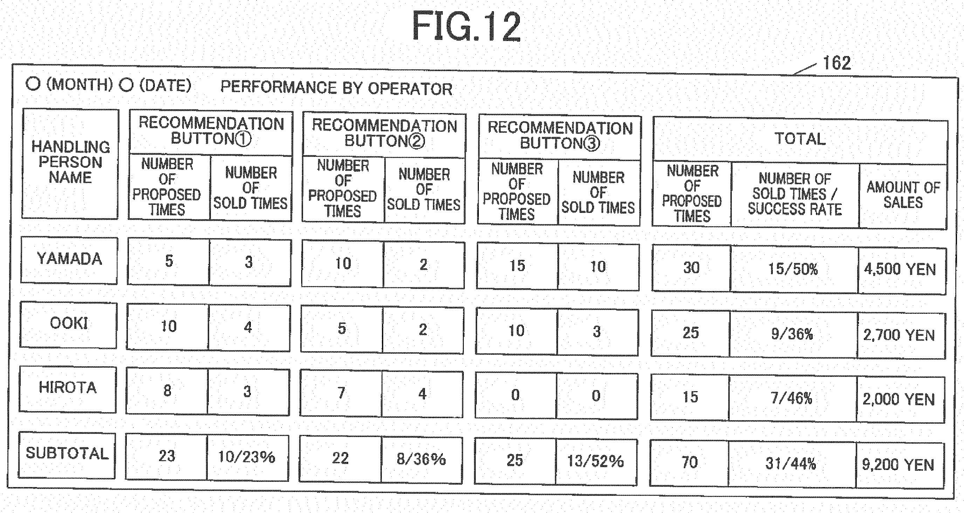

FIG. 12 shows an example of a report 162 output at Step S34.

FIG. 12 shows a case where "daily" is specified as the tallying period.

As shown in FIG. 12, on the report 162, the number of proposed times and the number of sold times for each recommendation button 121g, the total number of proposed times and the total number of sold times, the success rate, the amount of sales and so forth are displayed for each operator.

Hence, a manager at a store/shop or the like can grasp, about each operator, if an operator has been proposing items using the recommendation buttons 121g, if the proposal has led to sales, which recommendation button(s) 121g has high sales effectiveness, and how much the proposal using the recommendation buttons 121g has affected sales.

### (Modification)

Next, a modification of the embodiment is described.

In the embodiment, as a form of displaying a recommendation button 121g at Step S6 of the item registration process, as shown in FIG. 7, a recommendation button 121g with an item name of a recommended item written is displayed on the item registration screen 121. However, the display form of recommendation buttons 121g is not limited thereto.

For example, if a recommended item related to a registered item is an optional item, the CPU 10 first, for example, vibrates or blinks an option button 121c for an option containing the recommended item, and thereby displays the option button 121c such that an operator can recognize that a recommendation button(s) 121g is present under the option button 121c.

For example, in FIG. 6, when a "Men Jacket (menswear, upper garment) " item button 121b is pressed, a "Course" option button 121c vibrates or blinks.

When determines that a press on the vibrating or blinking option button 121c is detected by the touch panel 111, the CPU 10 displays an option detail selection screen 123 on the operator display unit 12.

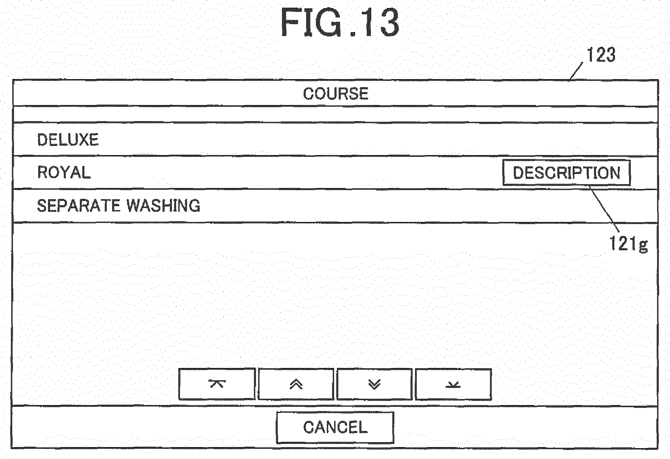

FIG. 13 shows an example of the option detail selection screen 123.

The screen shown in FIG. 13 is displayed when the "Course" option button 121c is pressed.

As shown in FIG. 13, on the option detail selection screen 123, selectable optional items are displayed as a list. For a recommended item(s) among the items displayed in the list, a "Description" button is displayed in such a way as to be correlated therewith. This "Description" button is a recommendation button 121g. When the touch panel 111 detects a press on the "Description" button, the CPU 10 determines that a press on a recommendation button 121g is detected by the touch panel 111 and performs Step S8 and the following steps of the item registration process.

Thus, in the modification, in the case where a recommendation button 121g is displayed by pressing a superior button, such as an option button 121c, the superior button is made to vibrate or blink to let an operator know that a recommendation button(s) 121g is present under the superior button. Hence, an operator can easily recognize that a recommendation button(s) 121g is displayed by pressing the superior button.

When, for example, an item of a shirt is registered, a color needs to be selected by pressing a "Color" option button 121c. Thus, in the case where a button necessary to be pressed after an item is registered is present, after an item button 121b is pressed, the button necessary to be pressed next may be displayed such that an operator can recognize presence of the button; for example, the button is made to vibrate or blink.

As described above, according to the sales data processing device 1, the CPU 10 displays a recommendation button 121g on the screen of the operator display unit 12, and when the recommendation button 121g is operated by an operator, displays information on a recommended item corresponding to the recommendation button 121g on the screen of the customer display unit 15 and displays an input button (the "Accept" button 122c, the "Stop" button 122d) to input whether a customer purchases the recommended item on the screen of the operator display unit 12.

Thus, information on a recommended item is displayed on the customer display unit 15 in response to an operator operation. Hence, an operator can attend to a customer by working together with the display on the customer display unit 15, and can propose an item to the customer more effectively. Further, whether a recommended item displayed on the customer display unit 15 is actually purchased is input. Hence, degree of effectiveness of proposal of an item with a press on a recommendation button 121g can be easily obtained.

Further, when the recommendation button 121g is operated, the CPU 10 further displays a description of the recommended item to be given to the customer on the screen of the operator display unit 12. This assists an operator in proposing a recommended item to a customer and accordingly encourages the operator to propose the recommended item.

Further, when the recommendation button 121g is operated, the CPU 10 displays the input button (the "Accept" button 122c, the "Stop" button 122d) on the screen of the operator display unit 12 instead of the recommendation button 121g. Hence, after operating a recommendation button 121g, an operator can input whether a customer purchases a recommended item corresponding to the recommendation button 121g.

Further, the CPU 10 displays a still image or a moving image related to the recommended item on the screen of the customer display unit 15 as the information on the recommended item. Hence, a recommended item can be proposed more effectively.

Further, the CPU 10 displays recommendation buttons 121g for respective recommended items on the screen of the operator display unit 12, and displays, on the screen of the customer display unit 15, the information on the recommended item corresponding to the recommendation button 121g operated by the operator among the recommendation buttons 121g. Hence, a recommended item selected by an operator from a plurality of recommended items can be proposed.

Further, when an item is registered from the screen displayed on the operator display unit 12, the CPU 10 displays, on the screen of the operator display unit 12, the recommendation button 121g for the recommended item related to the registered item. Hence, a recommended item related to an item purchased by a customer can be proposed more effectively.

Further, the CPU 10 makes the printing unit 16 print advertisement information on the recommended item on a receipt when the input button is operated to input that the customer does not purchase the recommended item. Hence, an impression of a proposed recommended item can be given to a customer more effectively.

Further, the CPU 10 tallies, for each operator, the number of proposed times indicating the number of times the recommendation button 121g has been operated and the number of sold times indicating the number of times the recommended item corresponding to the recommendation button 121g has been purchased. Hence, a manager or the like can grasp, about each operator, if an operator has been proposing items using the recommendation buttons 121g, if the proposal has led to sales, and so forth.

Further, the CPU 10 performs the above-described tallying in a tallying period which is specified from daily, by day of the week, monthly, and a specific period. Hence, a user can perform the tallying in a desired tallying period.

The above embodiment and modification are preferred examples of the sales data processing device 1 of the present invention, and hence not intended to limit the present invention.

For example, in the embodiment, when a recommended item corresponding to a recommendation button 121g is not purchased by a customer, advertisement information on the recommended item is printed on recording paper. Additionally or alternatively, a discount coupon for the recommended item may be printed by the printing unit 16. This is effective in increasing customer's willingness to purchase a recommended item.

Further, in the embodiment, a recommendation button 121g for a recommended item related to an item purchased by a customer (registered item) is displayed on the operator display unit 12. However, the recommendation button(s) 121g is not limited to a button for a recommended item related to an item purchased by a customer.

For example, a recommendation button 121g for an item in a sales campaign may be appropriately displayed on the operator display unit 12.

Further, the customer display unit 15 may include a speaker and output information on a recommended item by sound.

Details of the configuration and action of the sales data processing device 1 can also be appropriately modified without departing from the spirit of the present invention.

## Claims

1. A sales data processing device comprising:
an operator display unit which displays a screen for an operator to operate;
a customer display unit which displays a screen for a customer to view; and
a display control unit which displays, on the screen of the operator display unit, a recommendation button to start displaying information on a recommended item on the screen of the customer display unit, and when the recommendation button is operated by the operator, displays the information on the recommended item on the screen of the customer display unit and displays an input button to input whether the customer purchases the recommended item on the screen of the operator display unit.

2. The sales data processing device according to claim 1, wherein when the recommendation button is operated, the display control unit further displays a description of the recommended item to be given to the customer on the screen of the operator display unit.

3. The sales data processing device according to claim 1, wherein when the recommendation button is operated, the display control unit displays the input button on the screen of the operator display unit instead of the recommendation button.

4. The sales data processing device according to claim 1, wherein the display control unit displays a still image or a moving image related to the recommended item on the screen of the customer display unit.

5. The sales data processing device according to claim 1, wherein the display control unit displays recommendation buttons for respective recommended items on the screen of the operator display unit, and displays, on the screen of the customer display unit, the information on the recommended item corresponding to the recommendation button operated by the operator among the recommendation buttons.

6. The sales data processing device according to claim 1, wherein when an item is registered from the screen displayed on the operator display unit, the display control unit displays, on the screen of the operator display unit, the recommendation button for the recommended item related to the registered item.

7. The sales data processing device according to claim 1, further comprising a printing unit which prints advertisement information on the recommended item on recording paper when the input button is operated to input that the customer does not purchase the recommended item.

8. The sales data processing device according to claim 1, further comprising a tallying unit which tallies, for each operator, a number of proposed times indicating a number of times the recommendation button has been operated and a number of sold times indicating a number of times the recommended item corresponding to the recommendation button has been purchased.

9. The sales data processing device according to claim 8, wherein the tallying unit tallies the number of proposed times and the number of sold times in a tallying period which is any of daily, by day of a week, monthly, and a specific period.

10. A sales data processing method comprising:
a first step of displaying, on a screen of an operator display unit which displays the screen for an operator to operate, a recommendation button to start displaying information on a recommended item on a screen of a customer display unit which displays the screen for a customer to view; and
a second step of, when the recommendation button is operated by the operator, displaying the information on the recommended item on the screen of the customer display unit and displaying an input button to input whether the customer purchases the recommended item on the screen of the operator display unit.

11. The sales data processing method according to claim 10, wherein when the recommendation button is operated, in the second step, a description of the recommended item to be given to the customer is further displayed on the screen of the operator display unit.

12. The sales data processing method according to claim 10, wherein when the recommendation button is operated, in the second step, the input button is displayed on the screen of the operator display unit instead of the recommendation button.

13. The sales data processing method according to claim 10, wherein in the second step, a still image or a moving image related to the recommended item is displayed on the screen of the customer display unit.

14. The sales data processing method according to claim 10, wherein in the second step, recommendation buttons for respective recommended items are displayed on the screen of the operator display unit, and the information on the recommended item corresponding to the recommendation button operated by the operator among the recommendation buttons is displayed on the screen of the customer display unit.

15. The sales data processing method according to claim 10, wherein when an item is registered from the screen displayed on the operator display unit, in the second step, the recommendation button for the recommended item related to the registered item is displayed on the screen of the operator display unit.

16. The sales data processing method according to claim 10, further comprising a printing step of printing advertisement information on the recommended item on recording paper when the input button is operated to input that the customer does not purchase the recommended item.

17. The sales data processing method according to claim 10, further comprising a tallying step of tallying, for each operator, a number of proposed times indicating a number of times the recommendation button has been operated and a number of sold times indicating a number of times the recommended item corresponding to the recommendation button has been purchased.

18. The sales data processing according to claim 17, wherein in the tallying step, the number of proposed times and the number of sold times are tallied in a tallying period which is any of daily, by day of a week, monthly, and a specific period.
